# EUROPÄISCHE PATENTSCHRIFT

(11) **EP 1 587 022 B1**
(45) Veröffentlichungstag und Bekanntmachung des Hinweises auf die Patenterteilung: **21.02.2007**
(21) Anmeldenummer: 05007835.1
(22) Anmeldetag: 09.04.2005
(51) Int. Cl.: G06K 7/00, G06K 19/07, H04L 12/56, G08C 17/02, H03M 13/09

(54) **Verfahren zur drahtlosen Datenübertragung**
Method for wireless data transfer
Méthode de transmission de données sans fil

(30) Priorität: 14.04.2004 DE 102004019309
(43) Veröffentlichungstag der Anmeldung: 19.10.2005
(73) Patentinhaber: ATMEL Germany GmbH, 74072 Heilbronn (DE)
(72) Erfinder: Friedrich, Ulrich, 74248 Ellhofen (DE)

(56) Entgegenhaltungen:
- DE-A1- 10 138 217
- DE-A1- 10 204 347
- US-A- 5 621 412
- US-A- 5 646 607
- US-B1- 6 172 609

## Beschreibung

Die Erfindung betrifft ein Verfahren zur drahtlosen Datenübertragung zwischen einer Basisstation und einem oder mehreren Transpondern nach dem Oberbegriff des Anspruchs 1.

Derartige Übertragungsverfahren zwischen einer oder mehreren Basisstationen bzw. Lesegeräten und einem oder mehreren Transpondern finden beispielsweise bei kontaktlosen Identifikationssystemen oder sogenannten Radio-Frequency-Identification(RFID)-Systemen Verwendung. Auf dem Transponder können auch Sensoren, beispielsweise zur Temperaturmessung, integriert sein. Derartige Transponder werden auch als Remote-Sensoren bezeichnet.

Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

In der älteren deutschen Patentanmeldung DE 102 04 347 (gegen die Anspruch 1 abgegrenzt wurde) und der DE 101 38 217 A1 sind Verfahren zur drahtlosen Datenübertragung zwischen einer Basisstation und einem Transponder beschrieben, bei denen zu übertragende Datenpakete einen Kopfabschnitt, einen Datenabschnitt mit zu übertragenden Nutzdaten und einen Endabschnitt umfassen. Der Kopfabschnitt dient zur Einstellung von einem oder mehreren Übertragungsparametern, insbesondere werden die zu übertragenden Nutzdaten mit Hilfe von Symbolen kodiert und übertragen, die sich im Kopfabschnitt des Datenpakets befinden. Ein Symbol dient hierbei zur Definition bzw. Interpretation des Wertes eines Zeichens.

Ein derartiges Symbol wird üblicherweise mit Hilfe einer Zeitdauer zwischen zwei aufeinanderfolgenden Zeichenabgrenzungsmarken oder Feldlücken, sogenannten "notches", im Kopfabschnitt dargestellt. Eine derartige Zeichenabgrenzungsmarke kann bei einer Amplitudenmodulation beispielsweise durch Unterdrückung bzw. Dämpfung des Trägersignals erzeugt werden. Eine weitere Möglichkeit der Amplitudenmodulation ist die sogenannte Zweiseitenbandmodulation mit unterdrücktem Träger, bei der die Frequenz des Trägersignals im resultierenden Spektrum unterdrückt ist. Der Transponder dekodiert empfangene Datenpakete auf Basis der im Kopfabschnitt enthaltenen Symbole, bzw. anhand der den Symbolen zugeordneten Zeitdauern, indem er zur Bestimmung des Wertes eines Zeichens dessen Zeitdauer mit den Zeitdauern der Symbole vergleicht.

Die Zeichenabgrenzungsmarken werden im Transponder üblicherweise mit Hilfe von sogenannten Receiver-Signal-Strength-Indicator(RSSI)-Schaltungen detektiert, die eine Feldabschwächung des von der Basisstation emittierten Feldes erkennen und daraufhin ein geeignetes Signal zur Auswertung im Transponder erzeugen. Aufgrund von Störquellen in der Umgebung von RFID-Systemen, beispielsweise herkömmlichen, GSM-basierten Mobilfunksystemen, können im Transponder fälschlicherweise Zeichenabgrenzungsmarken detektiert werden, ohne dass diese von der Basisstation erzeugt werden. Eine weitere Ursache für das Auftreten derartiger Störungen kann ein Frequenzsprung bei dem von der Basisstation emittierten elektromagnetischen Feld sein, wenn ein sogenannter Frequency-Hopping-Mechanismus verwendet wird. Auch eine Bewegung des Transponders in der Umgebung der Basisstation kann aufgrund der gegebenen Feldstärkeverteilung das Detektieren einer Zeichenabgrenzungsmarke hervorrufen.

Wenn eine derartige Störung während einer Datenübertragung bzw. während eines Telegramms zwischen Basisstation und Transponder auftritt, so entstehen in der Regel CRC-Fehler oder sogenannte Bit-Count-Fehler, die von den Kommunikationsteilnehmern in den sogenannten Sicherungsschichten des Übertragungsprotokolls erkannt werden. Die Kommunikationsteilnehmer können daraufhin beispielsweise das fehlerhafte Telegramm wiederholen.

Wenn außerhalb eines Telegramms fälschlicherweise eine Zeichenabgrenzungsmarke detektiert wird, interpretiert der Transponder dies üblicherweise als Beginn eines Telegramms. Der Transponder wartet nun auf nachfolgende Zeichenabgrenzungsmarken, um das Telegramm abzuarbeiten. Da in diesem Fall von der Basisstation keine Zeichenabgrenzungsmarken gesendet werden, tritt eine Blockade in einer Empfangseinheit des Transponders auf. Um derartige Blockaden zu vermeiden, wird in dem Transponder während der Datenübertragung, d.h. zumindest nach dem Empfang einer ersten Zeichenabgrenzungsmarke, überwacht, ob eine Zeitdauer zwischen zwei von der Basisstation gesendeten, aufeinanderfolgenden Zeichenabgrenzungsmarken eine Maximalzeit überschreitet bzw. ob innerhalb der Maximalzeit keine weitere Zeichenabgrenzungsmarken mehr empfangen wird. Wenn die Maximalzeit überschritten wird, wird die Empfangseinheit des Transponders zurückgesetzt. Eine Blockade bzw. Verriegelung der Empfangseinheit aufgrund einer fälschlicherweise empfangenen Zeichenabgrenzungsmarke wird somit verhindert.

Die Maximalzeit wird herkömmlicherweise derart statisch gewählt, dass sogenannte Worst-Case-Bedingungen abgedeckt sind. Hierzu wird die Maximalzeit auf eine hohe Dauer eingestellt, wodurch zwischen dem Auftreten einer Störung und dem Rücksetzen der Empfangseinheit entsprechend viel Zeit verstreicht. Der Datendurchsatz nimmt ab.

Der Erfindung liegt als technisches Problem die Bereitstellung eines Verfahrens der eingangs genannten Art zugrunde, welches eine Blockade der Empfangseinheit in gestörter Umgebung vermeidet, einfach realisierbar ist und gleichzeitig einen hohen Datendurchsatz zwischen Basisstation und Transponder sicherstellt.

Die Erfindung löst dieses Problem durch die Bereitstellung eines Verfahrens mit den Merkmalen des Anspruchs 1.

Erfindungsgemäß ist die Maximalzeit anhand des mindestens einen Symbols des Kopfabschnitts im Transponder bestimmbar. Dies ermöglicht eine dynamische Anpassung der Maximalzeit und damit des möglichen Datendurchsatzes an momentan vorherrschende Übertragungsbedingungen. Die Wahl der Maximalzeit muss nicht mehr auf Basis der Worst-Case-Bedingungen erfolgen, sondern kann adaptiv und somit optimiert an die Übertragungsbedingungen angepasst vorgenommen werden.

In einer Weiterbildung des Verfahrens nach Anspruch 2 wird die Maximalzeit durch Multiplikation des Wertes des wenigstens einen Symbols mit einem Faktor bestimmt. Dadurch kann die Maximalzeit beispielsweise größer als der oder die entsprechenden Werte der Symbole eingestellt werden. Dies verkürzt folglich die Übertragungszeit des Kopfabschnitts, da lediglich ein Bruchteil der Maximalzeit übertragen werden muss. Vorzugsweise erfolgt die Multiplikation mit einem Faktor von 2ⁿ, mit n = 1, 2, .... Eine derartige Multiplikation ist einfach durch eine entsprechenden Schiebeoperation im Transponder realisierbar.

In einer Weiterbildung des Verfahrens nach Anspruch 3 wird im Transponder die ermittelte Maximalzeit mit einem Grenzwert verglichen und im Fall einer Grenzwertüberschreitung auf den Grenzwert beschränkt. Auf diese Weise kann beispielsweise die Auswirkung eines Übertragungsfehlers bei der Übertragung des oder der Symbole minimiert werden. Zusätzlich kann dadurch eine Standard-Einstellung erzwungen werden.

In einer Weiterbildung des Verfahrens nach Anspruch 4 wird die Maximalzeit anhand eines ersten Symbols im Kopfabschnitt initialisiert und in Abhängigkeit von einem oder mehreren, in diesem Kopfabschnitt nachfolgenden Symbolen nachgeführt. Dies ermöglicht eine zuverlässige Überwachung der Zeitdauern zwischen zwei aufeinanderfolgenden Zeichenabgrenzungsmarken bereits nach dem Empfang des ersten Symbols, wobei eine Nachführung, beispielsweise eine Vergrößerung der Maximalzeit, anhand der nachfolgenden Symbole erfolgen kann. Die Nachführung kann sich auch über mehrere aufeinanderfolgende Datenpakete erstrecken.

In einer Weiterbildung des Verfahrens nach Anspruch 5 wird das mindestens eine Symbol anhand der Dauer zwischen zwei aufeinanderfolgenden Zeichenabgrenzungsmarken des Kopfabschnitts kodiert. Dies ermöglich eine einfach zu realisierende und auszuwertende Kodierung des oder der Symbole.

In einer Weiterbildung des Verfahrens nach Anspruch 6 und 10 ist die Überwachung, ob die Zeitdauer zwischen zwei von der Basisstation gesendeten, aufeinanderfolgenden Zeichenabgrenzungsmarken die Maximalzeit überschreitet, während vorgebbaren Betriebsphasen von Basisstation und/oder Transponder, insbesondere während einer asynchronen Datenübertragung, deaktivierbar. Während einer asynchronen Datenübertragung werden von der Basisstation keine Zeichenabgrenzungsinformationen übertragen. Die deaktivierbare Überwachung ermöglicht einen asynchronen Betrieb bzw. ein dynamisches Umschalten zwischen synchronem und asynchronem Betrieb, ohne dass hierbei ein Rücksetzen der Empfangseinheit aufgrund des Ausbleibens der Zeichenabgrenzungsinformationen erfolgen muss.

In einer Weiterbildung des Verfahrens nach Anspruch 7 wird der Wert mindestens eines Symbols im Transponder abgespeichert. Vorteilhafterweise wird gemäß Anspruch 8 des mindestens eine Symbol in Form eines Spannungswertes eines Speicherkondensators und/oder in Form eines Zählerstandes eines digitalen Zählers gespeichert. Dies ermöglicht eine einfache Speicherung des oder der Werte der Symbole, insbesondere wenn der oder diese anhand der Dauer zwischen zwei aufeinanderfolgenden Zeichenabgrenzungsmarken des Kopfabschnitts kodiert werden.

Eine vorteilhafte Ausführungsform der Erfindung ist in den Zeichnungen dargestellt und wird nachfolgend beschrieben. Hierbei zeigen schematisch:
- Fig. 1: ein Diagramm eines Datenpaketes mit einem Kopfabschnitt, einem Datenabschnitt und einem Endabschnitt,
- Fig. 2: ein Zeitverlaufsdiagramm eines Kopfabschnitts eines Datenpakets und
- Fig. 2: ein Zustandsdiagramm einer Empfangseinheit eines Transponders.

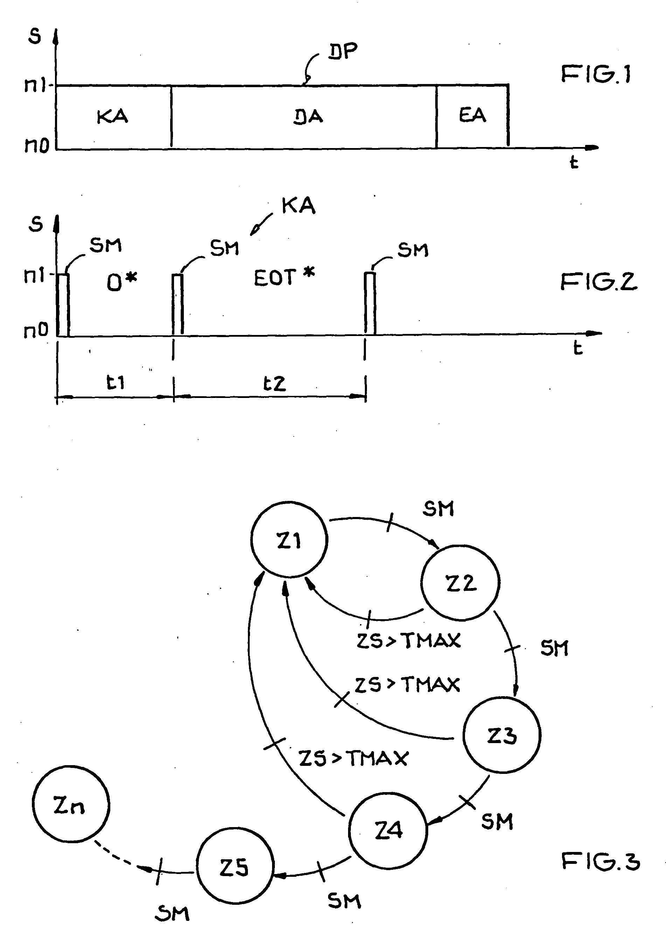

Fig. 1 zeigt ein schematisches Diagramm eines von einer Basisstation an einen oder mehrere Transponder übertragenen Datenpaketes DP mit einem Kopfabschnitt KA, an den sich ein Datenabschnitt DA mit zu übertragenden Nutzdaten und ein Endabschnitt EA anschließt. Zur Datenübertragung von der Basisstation zu dem oder den Transpondern werden von der Basisstation elektromagnetische Trägerwellen emittiert, auf welche die Datenpakete DP aufmoduliert werden. Die Datenübertragung vom oder von den Transpondern zur Basisstation erfolgt durch Modulation und Rückstreuen der elektromagnetischen Trägerwellen. Der Kopfanschnitt umfasst Symbole, die zur Einstellung bzw. Steuerung der Datenübertragung zwischen Transponder und Basisstation dienen.

Fig. 2 zeigt ein Diagramm des zeitlichen Verlaufs des Kopfabschnitts KA von Fig. 1 als Ausgangssignal einer RSSI-Schaltung des Transponders. Im dargestellten Kopfabschnitt KA sind zwei Symbole 0* und EOT* zur Einstellung von Übertragungsparametern enthalten. Die Symbole 0* und EOT* werden durch die Zeitdauer zwischen jeweils aufeinanderfolgenden Zeichenabgrenzungsmarken SM oder "notches" im Kopfabschnitt KA dargestellt, die durch Modulation des von der Basisstation BS emittierten Trägersignals erzeugt werden. Die Zeichenabgrenzungsmarken SM sind in Fig. 2 als kurze Impulse dargestellt.

Das erste Symbol 0* weist eine Dauer t1 und das zweite Symbol EOT* eine Dauer t2 auf, wobei die Zeitdauern t1 und t2 durch eine Zeiterfassungseinheit im Transponder ermittelt werden. Wenn die Zeiterfassungseinheit als digitale Zählerschaltung realisiert ist, wird jeweils ein den Zeitdauern t1 und t2 zugehöriger Zählerwert in einem zugeordneten Speicher abgelegt. Wenn die Zeiterfassungseinheit als RC-Schaltung realisiert ist, wird entsprechend ein erzielter Spannungswert in einem analogen Speicher abgelegt.

Das erste Symbol 0* bzw. dessen Zeitdauer t1 dient zur Kodierung bzw. Dekodierung der binären Zeichen "0" bzw. "1", aus denen zu übertragende Nutzdaten aufgebaut sind, die im Datenabschnitt DA des Datenpakets DP enthalten sind. Das Zeichen EOT* dient zur Kennzeichnung des Endes eines Datenpakets und wird im Endabschnitt des Datenpakets übertragen, wozu beliebige, aus t2 abgeleitete Signalformen verwendet werden können. Ein binäres Zeichen im Datenabschnitt, dessen Zeitdauer kleiner als die zum Symbol 0* gehörige Zeitdauer t1 ist, wird im Transponder TR als eine "0" interpretiert. Ein Zeichen, dessen Zeitdauer größer als t1 und kleiner als die zum Zeichen EOT* gehörige Zeitdauer t2 ist, wird als eine "1" interpretiert. Ist der zeitliche Abstand zwischen zwei aufeinanderfolgenden Feldlücken größer als t2, erkennt der Transponder TR das Ende eines Datenpakets.

Fig. 2 zeigt ein stark vereinfachtes Zustandsdiagramm einer Empfangseinheit eines Transponders. Im Zustandsdiagramm sind Zustände Z1 bis Z5 und Zn dargestellt.

Der Zustand Z1 entspricht einem Grundzustand der Empfangseinheit des Transponders, in dem auf den Beginn eines Datenpaketes DP gewartet wird. Wird im Zustand Z1 eine Zeichenabgrenzungsmarke SM detektiert, erfolgt ein Zustandswechsel zum Zustand Z2.

Im Zustand Z2 wartet der Transponder auf den Empfang der nächsten Zeichenabgrenzungsmarke SM, wobei im Transponder nach dem Empfang der ersten Zeichenabgrenzungsmarke SM ein Zähler gestartet wird, dessen Zählerstand ZS der abgelaufenen Wartezeit entspricht. Der Zählerstand ZS wird fortlaufend mit einem Maximalwert TMAX verglichen, der einer Maximalzeit bzw. einer maximalen Wartezeit entspricht. Bei einem Überschreiten des Maximalwertes TMAX wird die Empfangseinheit des Transponders zurückgesetzt, d.h. es findet ein Zustandswechsel zurück zum Zustand Z1 statt. Eine derartige Überschreitung tritt in der Regel jedoch nur dann auf, wenn die erste Zeichenabgrenzungsmarke SM nicht von der Basisstation erzeugt, sondern durch eine Störung hervorgerufen wurde. Bei der störungsfreien Übertragung eines Datenpaketes DP erfolgt ein Rücksetzen des Zählers bzw. des Zählerstandes ZS und ein Wechsel in einen nachfolgenden Zustand. Der Maximalwert TMAX wird nach einem Hochfahren bzw. nach einem Power-Up-Reset des Transponders mit einem in dessen Speicher abgelegten Anfangswert initialisiert. Dieser Anfangswert wird nach dem Empfang eines ersten Datenpakets DP bzw. nach dem Empfang von mindestens zwei Zeichenabgrenzungsmarken SM, d.h. üblicherweise ab dem Zustand Z3, überschrieben.

Wenn im Zustand Z2 innerhalb der Maximalzeit TMAX eine Zeichenabgrenzungsmarke SM empfangen wird, findet ein Zustandswechsel zum Zustand Z3 statt. Der Zählerstand ZS des Zählers repräsentiert hierbei die Zeitdauer zwischen der ersten und der zweiten empfangenen Zeichenabgrenzungsmarke SM, wobei die Zeitdauer bzw. der zugehörige Zählerstand ZS das Symbol 0* kodiert. Der Zählerstand ZS wird im Transponder in einem dem Symbol 0* zugeordneten Register abgespeichert. Weiterhin wird der Maximalwert TMAX anhand des Symbols 0*, d.h. durch Multiplikation des dem Symbol 0* zugeordneten Zählerstandes ZS mit einer Zweierpotenz, beispielsweise 8, bestimmt. Eine Multiplikation mit einer Zweierpotenz ist durch eine einfache Schiebe- bzw. Shift-Operation realisierbar. Innerhalb des Zustands Z3 wird wiederum überwacht, ob der Zählerstand ZS den wie oben beschrieben bestimmten Maximalwert TMAX überschreitet. Bei einem Überschreiten des Maximalwertes TMAX wird die Empfangseinheit des Transponders zurückgesetzt, d.h. es findet ein Zustandswechsel zurück zum Zustand Z1 statt.

Wenn im Zustand Z3 innerhalb der Maximalzeit TMAX eine Zeichenabgrenzungsmarke SM empfangen wird, findet ein Zustandswechsel zum Zustand Z4 statt. Der Zählerstand ZS des Zählers repräsentiert nun die Zeitdauer zwischen der zweiten und der dritten Zeichenabgrenzungsmarke SM, wobei die Zeitdauer bzw. der zugehörige Zählerstand ZS das Symbol EOT* kodiert. Der Zählerstand ZS wird im Transponder in einem dem Symbol EOT* zugeordneten Register abgespeichert. Weiterhin wird der Maximalwert TMAX erneut, nun anhand des Symbols EOT*, d.h. durch Multiplikation des dem Symbol EOT* zugeordneten Zählerstandes ZS mit einer Zweierpotenz, beispielsweise 8, bestimmt. Innerhalb des Zustands Z4 wird wiederum überwacht, ob der Zählerstand ZS den wie oben beschrieben bestimmten Maximalwert TMAX überschreitet. Bei einem Überschreiten des Maximalwertes TMAX wird die Empfangseinheit des Transponders zurückgesetzt, d.h. es findet ein Zustandswechsel zurück zum Zustand Z1 statt.

Wenn im Zustand Z4 innerhalb der Maximalzeit TMAX eine Zeichenabgrenzungsmarke SM empfangen wird, endet der Kopfabschnitt und es findet ein Zustandswechsel zum Zustand Z5 statt. Im Zustand Z5 sowie in nachfolgenden, nicht näher beschriebenen Zuständen Zn wird der Datenabschnitt DA empfangen und dekodiert sowie das Ende des Datenpakets DP detektiert.

Die Maximalzeit TMAX wird im gezeigten Ausführungsbeispiel nach einem Reset des Transponders anhand eines Speicherwertes initialisiert und anschließend beim Empfang eines ersten Datenpaketes anhand des Symbols 0* und anschließend anhand des Symbols EOT* des Kopfabschnitts KA berechnet. Es besteht jedoch auch die Möglichkeit, die Maximalzeit lediglich anhand nur eines Symbols, beispielsweise 0* zu berechnen. Weiterhin besteht die Möglichkeit ein weiteres Symbol im Kopfabschnitt einzuführen um die Maximalzeit TMAX einzustellen. In allen Fällen kann die Basisstation die Maximalzeit TMAX angepasst an die von ihr detektierten Übertragungsbedingungen einstellen.

Wenn mehrere Datenpakete DP empfangen werden, kann eine Bestimmung der Maximalzeit TMAX nur anhand eines, beispielsweise des ersten empfangenen Datenpaketes DP stattfinden, oder die Maximalzeit TMAX kann mit jedem empfangenen Datenpaket DP neu berechnet werden.

Das Ausführungsbeispiel verdeutlicht das erfindungsgemäße Verfahren anhand einer Datenübertragung von der Basisstation in Richtung des Transponders. Selbstverständlich ist es auch im Rahmen einer Datenübertragung vom Transponder in Richtung der Basisstation anwendbar, wenn diese Datenübertragung durch Senden eines sogenannten Returnlink-Headers durch die Basisstation eingeleitet wird. Die im Returnlink-Header vorhandenen Symbole können hierbei in gleicher Weise zur Einstellung der Maximalzeit verwendet werden, wenn die Datenübertragung in Richtung der Basisstation synchron zu den Synchronisationsmarken erfolgt.

Wenn die Datenübertragung vom Transponder in Richtung der Basisstation dynamisch, durch Übertragen von Steuerinformationen durch die Basisstation an den Transponder in einen asynchronen Übertragungsmodus umgeschaltet werden kann, besteht die Möglichkeit, die Überwachung zu deaktivieren. Dies ist notwendig, da im asynchronen Übertragungsmodus in der Regel keine Synchronisationsmarken durch die Basisstation übertragen werden.

Das gezeigte Ausführungsbeispiel ermöglicht eine dynamische Anpassung der Maximalzeit TMAX und damit des möglichen Datendurchsatzes an momentan vorherrschende Übertragungsbedingungen. Die Wahl der Maximalzeit TMAX muss nicht mehr auf Basis der Worst-Case-Bedingungen erfolgen, sondern kann adaptiv und somit optimiert an die Übertragungsbedingungen angepasst vorgenommen werden.

## Patentansprüche

1. Verfahren zur drahtlosen Datenübertragung zwischen einer Basisstation und einem Transponder, bei dem
- Daten zwischen der Basisstation und dem Transponder in Form von Datenpaketen (DP) übertragen werden, die einen Kopfabschnitt (KA) mit mindestens einem Symbol (0*, EOT*) zur Einstellung von einem oder mehreren Übertragungsparametern und mindestens einen weiteren Abschnitt (DA, EA) mit Zeichen umfassen, wobei die Zeichen durch Zeichenabgrenzungsmarken (SM) voneinander getrennt sind, und
- in einem Transponder während der Datenübertragung überwacht wird, ob eine Zeitdauer (ZS) zwischen zwei von der Basisstation gesendeten, aufeinanderfolgenden Zeichenabgrenzungsmarken (SM) eine Maximalzeit (TMAX) überschreitet und bei einem Überschreiten der Maximalzeit (TMAX) eine Empfangseinheit des Transponders zurückgesetzt wird,
**dadurch gekennzeichnet, dass**
- die Maximalzeit (TMAX) anhand des mindestens einen Symbols (0*, EOT*) des Kopfabschnitts (KA) im Transponder bestimmt wird.

2. Verfahren nach Anspruch 1, **dadurch gekennzeichnet, dass** die Maximalzeit (TMAX) durch Multiplikation des Wertes des mindestens einen Symbols (0*, EOT*) mit einem Faktor bestimmt wird.

3. Verfahren nach Anspruch 1 oder 2, **dadurch gekennzeichnet, dass** im Transponder die ermittelte Maximalzeit (TMAX) mit einem Grenzwert verglichen und im Fall einer Grenzwertüberschreitung auf den Grenzwert beschränkt wird.

4. Verfahren nach einem der vorhergehenden Ansprüche, **dadurch gekennzeichnet, dass** die Maximalzeit (TMAX) anhand eines ersten Symbols (0*) im Kopfabschnitt initialisiert wird und in Abhängigkeit von einem oder mehreren, in diesem Kopfabschnitt nachfolgenden Symbolen (EOT*) nachgeführt wird.

5. Verfahren nach einem der vorhergehenden Ansprüche, **dadurch gekennzeichnet, dass** das mindestens eine Symbol (0*, EOT*) anhand der Dauer (t1, t2) zwischen zwei aufeinanderfolgenden Zeichenabgrenzungsmarken (SM) des Kopfabschnitts (KA) kodiert wird.

6. Verfahren nach einem der vorhergehenden Ansprüche, **dadurch gekennzeichnet, dass** die Überwachung, ob die Zeitdauer zwischen zwei von der Basisstation gesendeten, aufeinanderfolgenden Zeichenabgrenzungsmarken (SM) die Maximalzeit (TMAX) überschreitet, während vorgebbaren Betriebsphasen von Basisstation und/oder Transponder deaktivierbar ist.

7. Verfahren nach einem der vorhergehenden Ansprüche, **dadurch gekennzeichnet, dass** der Wert des mindestens einen Symbols (0*, EOT*) im Transponder abgespeichert wird.

8. Verfahren nach Anspruch 7, **dadurch gekennzeichnet, dass** der Wert des mindestens einen Symbols (0*, EOT*) in Form eines Spannungswertes eines Speicherkondensators und/oder in Form eines Zählerstandes eines digitalen Zählers gespeichert wird.

9. Verfahren nach einem der vorhergehenden Ansprüche, **dadurch gekennzeichnet, dass** der Transponder passiv und/oder rückstreubasiert ist.

10. Verfahren nach einem der vorhergehenden Ansprüche, **dadurch gekennzeichnet, dass** die Überwachung, ob die Zeitdauer zwischen zwei von der Basisstation gesendeten, aufeinanderfolgenden Zeichenabgrenzungsmarken (SM) die Maximalzeit (TMAX) überschreitet, während einer asynchronen Datenübertragung deaktivierbar ist.

## Claims

1. Method for wireless data transmission between a base station and a transponder, in which
- data are transmitted between the base station and the transponder in the form of data packets (DP), which comprise a head section (KA) with at least one symbol (0*, EOT*) for setting one or more transmission parameters and at least one further section (DA, EA) with characters, wherein the characters are separated from one another by character delimiting marks (SM), and
- it is monitored in a transponder during the data transmission whether a time period (ZS) between two successive character delimitation marks (SM) transmitted by the base station exceeds a maximum time (TMAX) and if the maximum time (TMAX) is exceeded a receiving unit of the transponder is reset, **characterised in that**
- the maximum time (TMAX) is determined in the transponder by way of the at least one symbol (0*, EOT*) of the head section (KA).

2. Method according to claim 1, **characterised in that** the maximum time (TMAX) is determined through multiplication of the value of the at least one symbol (0*, EOT*) by a factor.

3. Method according to claim 1 or 2, **characterised in that** the ascertained maximum time (TMAX) is compared in the transponder with a limit value and in the case of exceeding the limit value is restricted to the limit value.

4. Method according to one of the preceding claims, **characterised in that** the maximum term (TMAX) is initialised by way of a first symbol (0*) in the head section and is adjusted in dependence on one or more subsequent symbols (EOT*) succeeding in this head section.

5. Method according to one of the preceding claims, **characterised in that** the at least one symbol (0*, EOT*) is coded by way of the duration (t1, t2) between two successive character delimitation marks (SM) of the head section (KA).

6. Method according to one of the preceding claims, **characterised in that** the monitoring whether the time duration between two successive character delimitation marks (SM) transmitted by the base station exceeds the maximum time (TMAX) is deactivatable during predetermined operating phases of base station and/or transponder.

7. Method according to one of the preceding claims, **characterised in that** the value of the at least one symbol (0*, EOT*) is stored in the transponder.

8. Method according to claim 7, **characterised in that** the value of the at least one symbol (0*, EOT*) is stored in the form of a voltage value of a storage capacitor and/or in the form of a counter state of a digital counter.

9. Method according to one of the preceding claims, **characterised in that** the transponder is passive and/or based on backscatter.

10. Method according to one of the preceding claims, **characterised in that** the monitoring whether the time duration between two successive character delimitation marks (SM) transmitted by the base station exceeds the maximum time (TMAX) is deactivatable during an asynchronous data transmission.

## Revendications

1. Procédé de transmission de données sans fil entre une station de base et un transpondeur, dans lequel
. des données sont transmises entre la station de base et le transpondeur sous la forme de paquets de données (DP), comprenant une section d'entête (KA) avec au moins un symbole (0*, EOT*) pour la définition d'un ou plusieurs paramètres de transmission et au moins une section supplémentaire (DA, EA) comportant des signes, procédé dans lequel les signes sont séparés les uns des autres par des marques de délimitation de signes, et
. on surveille dans un transpondeur durant la transmission des données le dépassement d'une durée (ZS) entre deux marques de délimitation de signes (SM) envoyées par la station de base par rapport à une durée maximale (TMAX), et en cas de dépassement de la durée maximale (TMAX), on réinitialise une unité de réception du transpondeur,
**caractérisé en ce que**
. l'on détermine dans le transpondeur la durée maximale (TMAX) à partir de l'au moins un symbole (0*, EOT*) de l'en-tête (KA).

2. Procédé selon la revendication 1, **caractérisé en ce que** la durée maximale (TMAX) est déterminée en multipliant la valeur de l'au moins un symbole (0*, EOT*) par un facteur.

3. Procédé selon la revendication 1 ou 2, **caractérisé en ce que** dans le transpondeur, on compare la durée maximale (TMAX) déterminée à une valeur de seuil et en cas de dépassement de la valeur de seuil, on la limite à la valeur de seuil.

4. Procédé selon l'une quelconque des revendications précédentes, **caractérisé en ce que** la durée maximale (TMAX) est initialisée dans l'en-tête à l'aide d'un premier symbole (0*) et est asservie en fonction d'un ou plusieurs des symboles (EOT*) qui suivent dans l'en-tête.

5. Procédé selon l'une quelconque des revendications précédentes, **caractérisé en ce que** l'on code l'au moins un symbole (0*, EOT*) au moyen de la durée (t1, t2) entre deux marques de délimitation de signes (SM) consécutives de l'en-tête (KA).

6. Procédé selon l'une quelconque des revendications précédentes, **caractérisé en ce que** l'on peut désactiver, durant des phases de fonctionnement pouvant être prédéfinies de la station de base et/ou du transpondeur, la vérification du dépassement de la durée entre deux marques de délimitation de signes (SM) consécutives émises par la station de base par rapport à la durée maximale (TMAX).

7. Procédé selon l'une quelconque des revendications précédentes, **caractérisé en ce que** l'on mémorise dans le transpondeur la valeur de l'au moins un symbole (0*, EOT*).

8. Procédé selon la revendication 7, **caractérisé en ce que** l'on mémorise la valeur de l'au moins un symbole (0*, EOT*) sous la forme d'une valeur de tension d'un condensateur de puissance et/ou sous la forme d'une position de compteur d'un compteur numérique.

9. Procédé selon l'une quelconque des revendications précédentes, **caractérisé en ce que** le transpondeur est passif ou basé sur la rétrodiffusion.

10. Procédé selon l'une quelconque des revendications précédentes, **caractérisé en ce que** l'on peut activer, durant une transmission de données asynchrone, la vérification de la durée entre deux marques de délimitation de signes (SM) consécutives émises par la station de base par rapport à la durée maximale (TMAX).
